# EUROPEAN PATENT APPLICATION

(11) **EP 4 373 128 A1**
(43) Date of publication of application: **22.05.2024**
(21) Application number: 22208309.9
(22) Date of filing: 18.11.2022
(51) Int. Cl.: H04R 1/02, G03B 31/00, H04R 1/34

(54) **A PROTECTION COVER ARRANGEMENT FOR A PROJECTION DEVICE**

(71) Applicant: Artome Oy, 19110 Vierumäki (FI)
(72) Inventor: Parikka, Toni, 19110 Vierumäki (FI); Isotalo, Mika, 21420 Lieto (FI)
(74) Representative: Papula Oy

(57) **Abstract**

A protecting cover arrangement (1) for a projection device (200), wherein the protecting cover arrangement (1) comprises a first portion (2), having a top wall (3), a first side wall (4) extending from the top wall (3), a second side wall (5) extending from the top wall (3) and at a distance from the first side wall (4), and a front wall (6) defining together a first cover space (8) for receiving the projection device (200); at least one enclosure (17); and at least one loudspeaker system (), wherein the at least one loudspeaker system (70) comprises at least one speaker module (71) comprising at least one waveguide module (72) and at least one transducer (73); and the at least one loudspeaker system (70) comprises at least two transducers (73) arranged to the at least one enclosure (17) using the at least one waveguide module (72).

## Description

### FIELD OF THE INVENTION

The present application relates generally to a protection cover arrangement for a projection device. The invention relates also to a projection device cabinet.

### BACKGROUND OF THE INVENTION

A projector that displays images by projecting projection light onto a screen or a wall or other reflective surface are generally known and widely used.

Even movable projectors and other related equipment need installation and set-up work before the projector and related equipment are ready for use. This takes time and often expert knowledge is needed for a user. Furthermore, there is a risk of damaging the projector and related audiovisual equipment during moving them from a storage to operation site.

Projector cabinet may include loudspeakers. The projector cabinet loudspeakers have a drawback that the sound may be directed uncontrollably and sound pressure may be limited due to a limited loudspeaker size and limited acoustical space. This may lower speech clarity and amount of coverage. In addition, big size of the projector cabinet loudspeaker may limit its use. The sound quality may be improved further by the loudspeaker design.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. The scope of protection sought for various embodiments of the present disclosure is set out by the independent claims.

Example embodiments of the present disclosure provide a protecting cover arrangement for a projection device comprising at least one loudspeaker system. The at least one loudspeaker system may comprise at least one speaker module comprising at least one waveguide module and at least one transducer. However, the loudspeaker system may comprise two or more transducers with waveguide module. This way it may be possible to replace a single projector cabinet loudspeaker comprising one transducer with the loudspeaker system comprising at least two transducers with waveguide module and to direct the sound to the right place with the at least one waveguide module. With the single projector cabinet loudspeaker, without the waveguide, the sound may bounce uncontrollably, and the sound quality and speech clarity may be worse due to wall and floor reflections. This problem may exist in all kinds of spaces with walls and floors even when the audience is not on different levels. The at least one loudspeaker system with the at least one waveguide module and at least two transducers may reduce wall and floor reflections. This may acoustically increase volume of the sound to the desired area with the same power output. Also, the sound may be directed evenly to all people, regardless of where they are located.

According to a first aspect a protecting cover arrangement for a projection device is disclosed. The protecting cover arrangement may comprise a first portion, having a top wall, a first side wall extending from the top wall, a second side wall extending from the top wall and at a distance from the first side wall, and a front wall defining together a first cover space for receiving the projection device; at least one enclosure; and at least one loudspeaker system, wherein the at least one loudspeaker system may comprise at least one speaker module comprising at least one waveguide module and at least one transducer; and the at least one loudspeaker system may comprise at least two transducers arranged to the at least one enclosure using the at least one waveguide module.

When the projector cabinet loudspeaker does not have the waveguide module the sound may bounce uncontrollably, and the sound quality and speech resolution may be worse due to wall and floor reflections. The at least one loudspeaker system with the at least one waveguide module and at least two transducers may reduce wall and floor reflections. Also, big size of the projector cabinet loudspeaker may limit its use in a small protecting cover arrangement. For example, in an auditorium or another space where front row seats are located lower than back row seats, sound coverage may be challenging. In addition, the seats may be located sideways in a very wide area. For example, when the single projector cabinet loudspeaker, without waveguide module, is directed only in one direction, people sitting in the front may hear the sound well, but people sitting on sides and higher in the back row may not. Therefore, it may be beneficial to replace the single projector cabinet loudspeaker by the loudspeaker system comprising at least two transducers and at least one waveguide module. When using several transducers, it may be important to orient the transducers to the right direction with the waveguide module. The waveguide module comprising a waveguide may acoustically increase volume of the sound to the desired area with the same power output. With the waveguide module the sound of the transducer may be directed to a narrower area. This may reduce reflections. When using several transducers with the waveguides, the sound area may be further expanded. This way it may be possible to direct the sound evenly to all people, regardless of where people are located.

According to an example embodiment of the first aspect, the at least one transducer of the at least one speaker module may be arranged to the at least one enclosure using the at least one waveguide module.

According to an example embodiment of the first aspect, one or more transducers may be arranged to one or more enclosures using the at least one waveguide module.

According to an example embodiment of the first aspect, the loudspeaker system may comprise two speaker modules. Each of the speaker modules may comprise a transducer arranged to an enclosure using a waveguide module.

According to an example embodiment of the first aspect, the loudspeaker system may comprise at least one speaker module. The speaker module may comprise two or more transduces arranged to one or more enclosures using a waveguide module.

According to an example embodiment of the first aspect, the waveguide module may comprise at least one waveguide and a front part. The waveguide module may be used as a mounting bracket for the at least one transducer, it may be used to define the transducer installation angles, it may function as a waveguide, direct the sound, and may have the front part to protect the assembly arrangement.

According to an example embodiment of the first aspect, the at least one waveguide and the front part may be made of one piece or may form one piece. the waveguide module may be made of one piece. Different materials and techniques may be used to make the waveguide module. For example, when using 3D printing or molding techniques the waveguide module may be easy and fast to make in one piece. When the waveguide module is made of one piece the speaker module may be easy to maintain and change its parts. It may also be easy to make different versions of the waveguide module and change them, for example, one version for an auditorium and one for a sports hall.

According to an example embodiment of the first aspect, the at least one transducer may be arranged removably to the waveguide module. With the removable transducer it may be easy to change it or the waveguide to another when one of them breaks or when another type of transducer or waveguide is needed.

According to an example embodiment of the first aspect, the at least one speaker module may be arranged removably to the at least one enclosure. When the removable speaker module breaks down or when another type of speaker module is needed it may be easily changed to another.

According to an example embodiment of the first aspect, the loudspeaker system may comprise at least one column comprising the at least two transducers. The loudspeaker systems comprising the column, such as column loudspeaker systems, may fit into any projection device cabinet nicely because they may have smaller size. It may be possible to locate different amounts of the transducers or speaker modules on top of each other or side by side. They may also have flexible coverage areas, keep energy off walls and ceilings, and may direct the sound towards the audience. The column loudspeaker system may be capable of producing consistent sound levels from the front to the back of a listening space and coverage from the one side to another. Different speakers may be directed in different directions. For example one may be directed to produce sound for people in front, one for people behind, and one for each sides.

According to an example embodiment of the first aspect, the at least two transducers may be arranged in the at least one column using the at least one waveguide module. The waveguide module may be used as a mounting bracket for at least two transducers to form the at least one column. The waveguide module may also be used to mount one or more transducers of the at least one column to one waveguide module. Thus, one waveguide module may attach all the transducers of all the columns together.

According to an example embodiment of the first aspect, each column of the at least one column is arranged to its own enclosure. The protecting cover arrangement may comprise at least one enclosure wherein the at least one column may be arranged.

According to an example embodiment of the first aspect, the at least one column is arranged to the enclosure.

According to an example embodiment of the first aspect, the column is a vertical or horizontal column. The vertical and/or horizontal loudspeaker system may direct the sound and cover a wider area. The vertical column loudspeaker system may be capable of producing consistent sound levels from the front to the back of the listening space and from low to high, for example in an auditorium. The horizontal column loudspeaker system may be capable of producing coverage from one side to another.

According to an example embodiment of the first aspect, if the column is the vertical column, the at least two transducers may be arranged in at least one vertical installation angle in relation to a horizontal plane parallel to the top wall; or if the column is the horizontal column, the at least two transducers may be arranged in at least one horizontal installation angle in relation to the vertical plane parallel to the first or second side wall. The waveguide module may allow the transducers to be installed at different installation angles. This may allow the transducers to direct sound at different angles.

According to an example embodiment of the first aspect, the at least one waveguide module may comprise at least one attachment arrangement part arranged in the at least one vertical installation angle a in relation to the horizontal plane parallel to the top wall; or the at least one waveguide module may comprises at least one attachment arrangement part arranged in the horizontal installation angle d in relation to the vertical plane parallel to the first or second side wall, wherein each of the at least two transducers may be arranged to be attached to the corresponding attachment arrangement part. The attachment arrangement parts of the waveguide module may form the installation angles of the transducers and allow the transducers to be installed at different installation angles to direct the sound to different parts of the space, like auditorium, room, or sports hall, for example.

According to an example embodiment of the first aspect, the at least one waveguide may be configured to direct the sound according to a vertical and horizontal sound beam angle. The waveguide module may allow the transducers to be installed at different installation angles, which directs the sound, improves the sound quality and speech clarity. In addition to that the vertical and horizontal sound beam angles b, c of the waveguide may direct the sound even more accurately in the desired direction.

According to an example embodiment of the first aspect, the waveguide module may comprise at least one of the following: a camera, microphone, operation panel, and/or sensor. The camera, microphone, operation panel, and/or sensor may be attached to the waveguide module. The camera, microphone, operation panel, and/or sensor may be attached to the front part. This way it may be easy to change one or all of them to another when one of them breaks or when another kind or arrangement is needed. The camera, microphone, operation panel, and/or sensor may be arranged removably to the waveguide module or the front part.

According to an example embodiment of the first aspect, the protecting cover arrangement may further comprise at least one subwoofer. The subwoofer may add lower frequencies and quality to the sound.

According to a second aspect, a movable projection device cabinet is disclosed. The cabinet may comprise a base, a first cabinet side wall extending from the base, a second cabinet sidewall extending from the base and at a distance from the first cabinet side wall, a cabinet front wall, and cabinet back wall defining together a cabinet space, wherein the movable projection device cabinet may comprise a protecting cover arrangement according to any one of the first aspects and may be arranged on an upper part of the cabinet. It may be beneficial to replace the single loudspeaker by the loudspeaker system comprising several transducers and the at least one waveguide. When using several transducers, it may be important to direct the sound to the right place. The waveguide module comprising the waveguide may acoustically increase volume of the sound to the desired area with the same power output. With the waveguide module the sound of the one loudspeaker may be directed to a narrow area. This may reduce reflections. With several loudspeakers comprising the waveguides, the sound area may be expanded. This way it may be possible to direct the sound evenly to all people, regardless of where they are located.

According to an example embodiment of the second aspect, the cabinet may comprise one or more castors and/or furniture legs.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Fig 1 shows schematically an example of a back view of a protection cover arrangement on a projection device according to an example embodiment;
Fig. 2 shows schematically an example of a back view of a protection cover arrangement according to an example embodiment;
Fig. 3 shows schematically another example of a back view of a protection cover arrangement according to an example embodiment;
Fig. 4 shows schematically yet another example of a back view of a protection cover arrangement according to an example embodiment;
Fig. 5 shows schematically still another example of a back view of a protection cover arrangement according to an example embodiment;
Fig. 6 shows schematically still another example of a back view of a protection cover arrangement according to an example embodiment;
Fig. 7 shows schematically an example of a back view of a protection cover arrangement on a projection device according to an example embodiment;
Fig. 8 shows schematically an example of a front view of a protection cover arrangement on a projection device according to an example embodiment;
Fig. 9 shows schematically an example of a back view of a movable projection device cabinet according to an example embodiment;
Fig. 10 shows schematically an example of a front view of a movable projection device cabinet according to an example embodiment;
Fig. 11 shows schematically an example of a side view of a loudspeaker system according to an example embodiment;
Fig. 12 shows schematically an example of a top view of a loudspeaker system according to an example embodiment;
Fig. 13 shows schematically an example of a side view of directing sound in an auditorium according to an example embodiment; and
Fig. 14 shows schematically an example of a top view of directing sound in an auditorium according to an example embodiment.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps or operations for constructing and operating the example. However, the same or equivalent functions and sequences may be accomplished by different examples.

According to an example embodiment, a protecting cover arrangement for a projection device is disclosed. The projection device is, for example a projector or a hologram device.

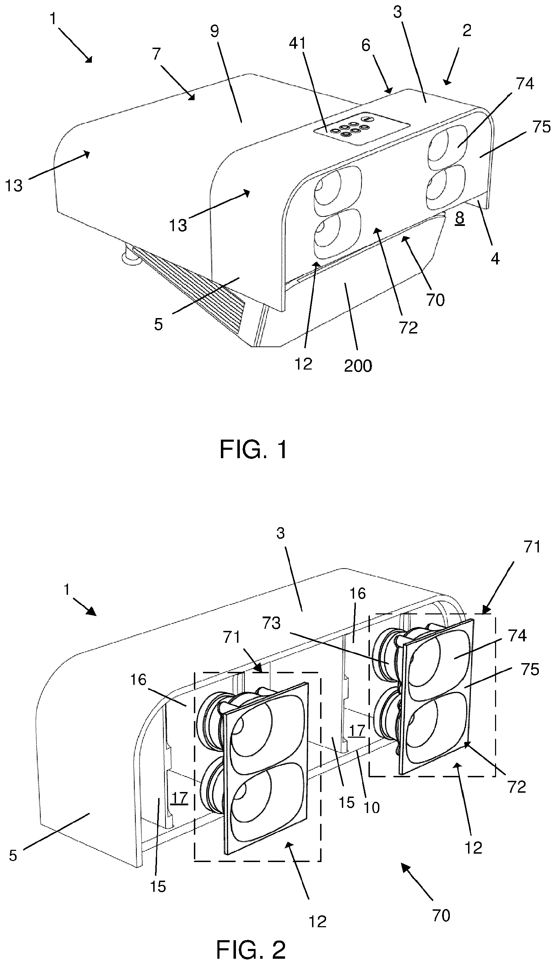

A diagrammatic illustration of an embodiment of a protecting cover arrangement 1 is depicted in Figures 1 to 8.

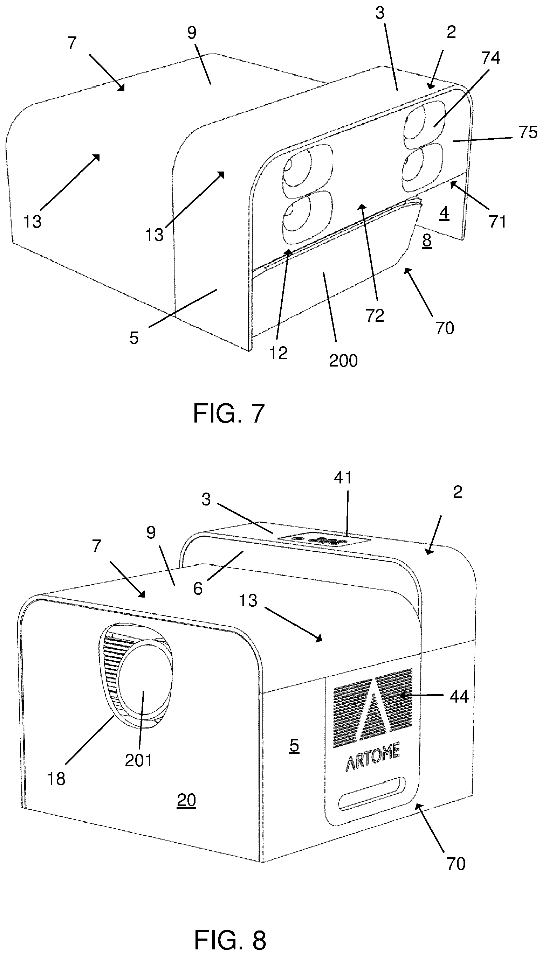

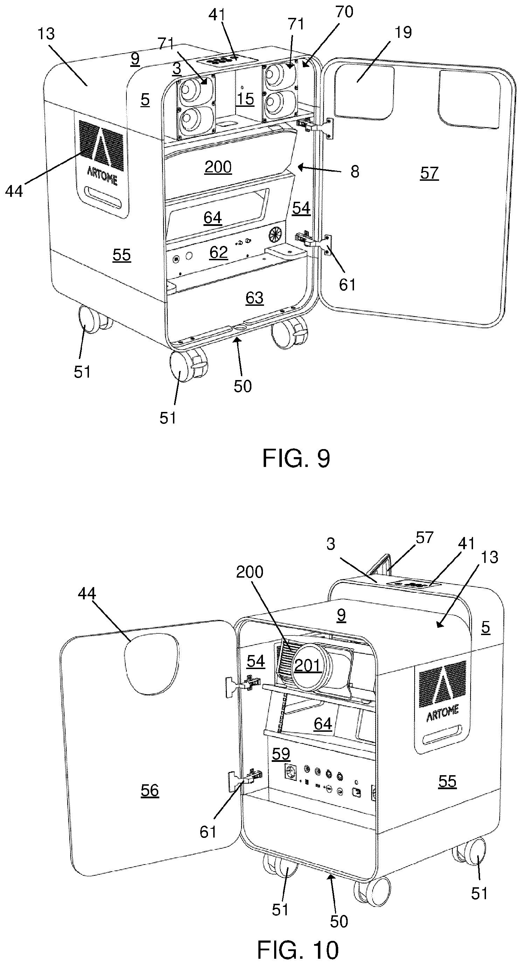

A diagrammatic illustration of an embodiment of a projection device cabinet 100 is depicted in Figures 8 and 9. The projection device cabinet 100 may comprise the protecting cover arrangement 1 according to Figures 1 to 8.

An example of Fig. 1 shows a protecting cover arrangement 1 for a projection device 200. The projection device may not be part of the invention. The protecting cover arrangement 1 may comprise a first portion 2. The first portion 2 may comprise a top wall 3. A first side wall 4 may extend downwards from the top wall 3. A second side wall 5 may extend downwards from the top wall 3, and at a distance from the first side wall 4. The first portion 2 may further comprise a front wall 6 extending downwards from the top wall 3 between the first side wall 4 and the second side wall 5. The first portion 2 may further comprise a back wall extending downwards from the top wall 3 between the first side wall 4 and the second side wall 5, and a distance from the front wall. The top wall 3, the first side wall 4, the second side wall 5 and the front wall 6 may define together a first cover space 8. The first cover space 8 may be configured for receiving the projection device 200. An example of Figure 1 may also comprise an operation panel 41 arranged on the upper part of the protecting cover arrangement 1. It may also comprise a loudspeaker system 70 arranged on the back part of the protecting cover arrangement 1.

According to an example embodiment, the protection cover arrangement 1 may comprise a second portion 7 comprising a lower top wall 9. The lower top wall 9 may extend from the front wall 6 of the first portion 2. The lower top wall 9 may be arranged at a distance downwards from the top wall 3 of the first portion 2. The second portion 7 may define below the lower top wall 9 a second cover space that connect with the first cover space 8. In an embodiment the first cover space 8 and second cover space form an integrated cover space.

According to an example embodiment, the first side wall 4 and/or the second side 5 wall may extend form the top wall 3 to a distance downwards. The distance may be varied according to the example embodiments. In Figures 1 to 6 the side walls may extend downwards from the top wall a distance that may be a part of a height of the projection device 200. In that embodiment the projection device may be partly covered by the arrangement 1.

According to an example embodiment, the first side wall 4 and the second side wall 5 extend downwards from the top wall 3 to a projection device support plate. In that embodiment the projection device 200 may be totally covered by the arrangement 1. This may be seen in Figures 7 and 8.

According to an example embodiment, a lower end of the side walls 4, 5 of the cover arrangement may be arranged to the support plate. In an example embodiment, the support plate is arranged to the side walls 4, 5 by fixing means.

According to an example embodiment of Figures 9 and 10, the first and second side wall 4, 5 may be connected to a first cabinet side wall 54 and second cabinet side wall 55 of the projection device cabinet 100.

In an example embodiment a curved transition zone 13 to the top wall 3 or the lower top wall 9 and/or to the first side wall 4 and/or to the second side wall 5 is arranged on a corner area between the top wall 3 or the lower top wall 9 and the first side wall 4 and/or a corner area between the top wall 3 or the lower top wall 9 and the second side wall 5.

According to an example embodiment, the protecting cover arrangement 1 comprises at least one enclosure 17 and at least one loudspeaker system 70. The at least one loudspeaker system 70 may comprise at least one speaker module 71. The at least one speaker module 71 may comprise at least one waveguide module 72 and at least one transducer 73. The at least one transducer 73 of the at least one speaker module 71 may be arranged to the at least one enclosure 17 using the at least one waveguide module 72. The at least two transducers 72 of the at least one speaker module 71 may be arranged to the at least one enclosure 17 using the at least one waveguide module 72.

In an example embodiment, the at least one enclosure 17 may be arranged extending from the top wall 3 a distance in the first cover space 8.

In an example embodiment the at least one enclosure 17 may be formed from a portion of the top wall 3, a portion of a support plane 10, a first partition wall 15, a second partition wall 16, and the front wall 6.

In an example embodiment the first and the second partition wall 15, 16 may be arranged extending from the support plane 10 to the top wall 3. In an example embodiment the first partition wall 15 and the second partition 16 wall may be arranged at a distance from each other, so that the at least one speaker module may be arranged between them.

In an example embodiment the loudspeaker system 70 or the at least one speaker module may be arranged to the at least one enclosure 17.

In an example embodiment at least one loudspeaker system 70 is operationally arranged to direct its sound on the back side of the first portion 2.

In an example embodiment an operation panel 41, optionally comprising at least one of the following: a camera 42, microphone 45, and/or sensor 46 arranged to an upper part of the arrangement 1, for example to the top wall 3 or to the waveguide module 72. In an example embodiment the camera 42 may be removable. In an example embodiment the camera 42 may be adjustable. By arranging the at least one camera to the arrangement, the arrangement may be used also in webinars, video calls and other suitable uses. Arranging the camera 42 in the operation panel 41 a suitable module for assembling is achieved. In an example embodiment there may be arranged a plurality of cameras 42. In an example embodiment the camera 42 may be a content camera and/or a conference camera. In an example embodiment the content camera may be arranged for creating images of a content, such as another subject or another view of the presenter or whiteboard or flip chart. In an example embodiment the camera 42 may be a pan-tilt camera. In an example embodiment the camera 42 may be a pan-tilt-zoom camera. In an example embodiment the pan-tilt-zoom camera may be capable of remote directional and zoom control.

In an example embodiment the operation panel 41 may be arranged on the upper part of the arrangement. In an example embodiment the operation panel 41 may be arranged on the top wall 3 of the arrangement 1. In an example embodiment the operation panel may be embedded to the top wall of the upper part of the arrangement. In an example embodiment a front surface of the operation panel 41 may be embedded at a distance inwards from a plane of the top wall 3 of the upper part of the arrangement. The operation panel 41 may comprise at least one or more of the following: on-off switch, volume up/down button(s), video signal in, HDMI, Mic/Line in, SPDIF in/out, several programmable user buttons, for example source, freeze, mute, pause. The operation panel may have power outlet.

In an example embodiment the operation panel 41 may comprise a touch screen. In an example embodiment the operation panel 41 may be a removable operation panel. In an example embodiment the projection cover arrangement or the movable projection device cabinet may comprise a computer. In an example embodiment the computer may be arranged in the operation panel 41.

In an example embodiment at least one fan may be arranged in the arrangement. The fan may be configured to bring air into the cover space 8 via openings 44 arranged on the first side wall 4 and/or the second side wall 5 of the arrangement for cooling the cover space 8.

In an example embodiment the transition zone 13 between the top wall 3 and first side wall 4 and/or second sidewall 5 of the arrangement may comprise a bent plywood board structure. In an embodiment the top wall and and/or the first side wall 4 and/or the second side wall 5 may comprise a plywood structure.

According to an example embodiment, the at least one loudspeaker system 70 comprises at least one speaker module 71, wherein the at least one speaker module 71 comprises at least one waveguide module 72 and at least one transducer 73.

According to an example embodiment, the waveguide module 72 comprises at least one waveguide 74 and a front part 75. The primary purpose of a waveguide is to control the direction of the sound, but it may also increase efficiency.

According to an example embodiment, the at least one waveguide 74 and the front part 75 are made of one piece or is configured to form one piece.

According to an example embodiment, the at least one transducer 73 is arranged removably to the waveguide module 72.

According to an example embodiment, the at least one speaker module 71 is arranged removably to the at least one enclosure 17.

According to an example embodiment, the loudspeaker system 70 comprises at least one column comprising at least one speaker module 71 or at least two transducers 73.

According to an example embodiment, the at least two transducers 73 of the at least one speaker module 71 are arranged in the at least one column using the at least one waveguide module 72.

According to an example embodiment, the at least one transducer 73 is arranged to the at least one enclosure 17.

According to an example embodiment, each column of the at least one column is arranged to its own enclosure 17. According to an example embodiment, at least two columns are arranged to one enclosure 17.

According to an example embodiment, the column is a vertical or horizontal column 12, 14.

According to an example embodiment, the waveguide module 72 comprises at least one of the following: a camera 42, microphone 45, operation panel 41, and/or sensor 46. According to an example embodiment, at least one of the following: the camera 42, microphone 45, operation panel 41, and/or sensor 46 is removable.

According to an example embodiment, the protecting cover arrangement 1 further comprises at least one subwoofer.

An example of Figure 1 shows schematically a back view of a protection cover arrangement 1 comprising a loudspeaker system 70 and an operation panel 41. The operation panel may be arranged on the top wall 3 of the protection cover arrangement 1. The loudspeaker system 70 may comprise a speaker module 71. The loudspeaker system 70 may comprise two vertical columns 12, wherein each vertical column may comprise two transducers 73. Four transducers 73 of the speaker module 71, two from each vertical columns 12, may be attached to one waveguide module 72. The waveguide module 72 may comprise four waveguides 74 and a front part 75. The four transducers 73 may be configured to be attached to the waveguide module 72. This may happen so that the transducers 73 may be attached to the back part of the waveguides 74, such as an attachment arrangement part 78. One transducer 73 may be attached to one waveguide 74.

An example of Figure 2 shows schematically a back view of a protection cover arrangement 1 comprising a loudspeaker system 70. The loudspeaker system 70 may comprise two speaker modules 71. Each of the two speaker modules 71 may comprise one vertical column 12. Each of the speaker modules 71 may be located in an own enclosure 17. Both of the speaker modules 71 may comprise two transducers 73 and a waveguide module 72. Two transducers 73 of the speaker module 71 may be attached to one waveguide module 72. The waveguide module 72 may comprise two waveguides 74 and a front part 75. The two transducers 73 may be configured to be attached to the waveguide module 72.

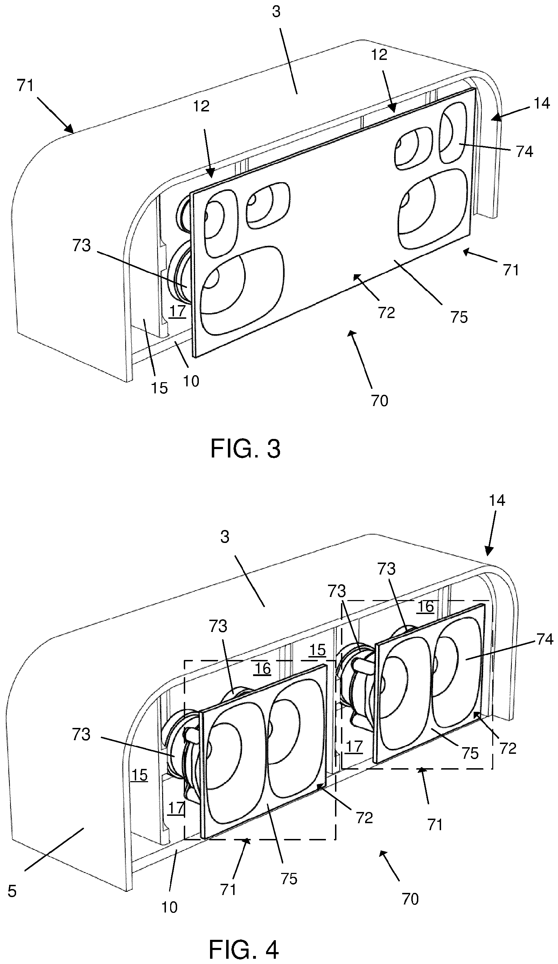

An example of Figure 3 shows schematically a back view of a protection cover arrangement 1 comprising a loudspeaker system 70. The loudspeaker system 70 may comprise one speaker module 71. The loudspeaker system 70 may comprise two vertical columns 12 and one horizontal column 14, for example. Each of the vertical columns 12 may comprise two transducers 73 and the horizontal column 14 may comprise two transducers 73. The speaker module may comprise six transducers 73. Three of the transducers 73 may be located in the same enclosure 17. Six transducers 73 of the speaker module 71, four from two vertical columns 12 and two from the horizontal column 14, may be attached to one waveguide module 72. The waveguide module 72 may comprise six waveguides 74 and a front part 75. This way size, direction, and location of the transducers 73 and the waveguides 74 may wary. In an example of Figure 3 there may be only one vertical or horizontal column 12, 14 comprising six transducers and one waveguide module 72. The transducers 73 may be arranged to different columns 12, 14 using the waveguide module 72. The columns 12, 14 may have different amount of transducers 73.

An example of Figure 4 shows schematically a back view of a protection cover arrangement 1 comprising a loudspeaker system 70. The loudspeaker system 70 may comprise two speaker modules 71. Each of the two speaker modules 71 may comprise one horizontal column 14. Each of the modules 71 may be located in an own enclosure 17. Both of the speaker modules 71 may comprise two transducers 73 and one waveguide module 72. Two transducers 73 of the speaker module 71 may be attached to one waveguide module 72. The waveguide module 72 may comprise two waveguides 74 and a front part 75. The two transducers 73 may be configured to be attached to the waveguide module 72.

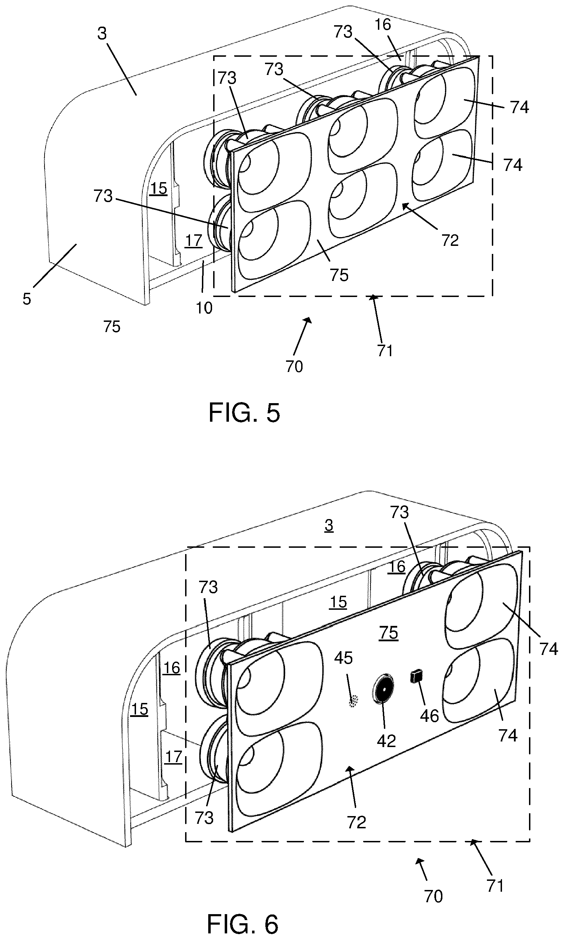

An example of Figure 5 shows schematically a back view of a protection cover arrangement 1 comprising a loudspeaker system 70. The loudspeaker system 70 may comprise a speaker module 71. According to an example embodiment, the loudspeaker system 70 may comprise three vertical columns 12 each comprising two transducers 73. According to an example embodiment, the loudspeaker system 70 may comprise two horizontal columns 14 each comprising three transducers 73. According to an example embodiment, the loudspeaker system 70 may comprise one column comprising six transducers 73. Six transducers 73 of the speaker module 71 may be attached to one waveguide module 72. The waveguide module 72 may comprise six waveguides 74 and a front part 75. The six transducers 73 may be configured to be attached to one waveguide module 72. This may happen so that the transducers 73 may be attached to the back part of the waveguides 74. One transducer 73 may be attached to one waveguide 74. All of the transducers 73 may be located in the same enclosure 17.

An example of Figure 6 shows schematically a back view of a protection cover arrangement 1 comprising a loudspeaker system 70. The loudspeaker system 70 may comprise one speaker module 71. The loudspeaker system 70 may comprise two vertical columns 12, wherein each vertical column 12 may comprise two transducers 73. Each of the columns 12 may be located in the own enclosure 17. Four transducers 73 of the speaker module 71, two from each vertical columns 12, may be attached to one waveguide module 72. The waveguide module 72 may comprise four waveguides 74 and a front part 75. The waveguide module 72 may also comprise at least one of the following: a camera 42, microphone 45, operation panel 41, and/or sensor 46. At least one of the following: the camera 42, microphone 45, operation panel 41, and/or sensor 46 may be arranged removably to the waveguide module 72. At least one of the following: the camera 42, microphone 45, operation panel 41, and/or sensor 46 may be arranged to the front part 75.

In an example embodiment of figures 7 and 8, the first side wall 4 and the second side wall 5 extend downwards from the top wall 3. In that example embodiment, the projection device 200 may be totally covered by the arrangement 1. According to an example embodiment, lower end of the side walls 4, 5 of the cover arrangement may be arranged to the support plate. In an example embodiment, the support plate is arranged to the side walls by fixing means.

An example of Figure 7 shows schematically a back view of a protection cover arrangement 1 comprising a loudspeaker system 70. The loudspeaker system 70 may comprise a speaker module 71. Four transducers 73 of the speaker module 71 may be attached to the waveguide module 72. The waveguide module 72 may comprise four waveguides 74 and a front part 75. The four transducers 73 may be configured to be attached to the waveguide module 72.

An example of Figure 8 shows schematically a back view of a protection cover arrangement 1 comprising a loudspeaker system 70 and an operation panel 41. The operation panel 41 may be arranged on the top wall 3 of the protection cover arrangement 1. The protection cover front wall 20 may comprise an opening 18 through the protection cover front wall 20 from the cover space 8 configured to receive a projecting structure 201 of the projection device 200. The projecting structure 201 is, for example, a lens and/or mirror system.

According to an example embodiment, at least one opening 18 for the projecting structure 201 may be arranged to any wall of the protecting cover arrangement 1 or the projection device cabinet 100. The opening 18 for the projecting structure 201 may be arranged to the top wall 3, lower top wall 9, and front wall 6. This opening may be used for a hologram device, for example.

A diagrammatic illustration of an embodiment of the arrangement with a projection device cabinet is depicted in figures 9 and 10.

According to an example embodiment a movable projection device cabinet 100 comprises a base 50, a plurality of castors 51, a first cabinet side wall 54 extending from the base 50, a second cabinet sidewall 55 extending from the base 50 and at a distance from the first cabinet side wall 54. A cabinet front wall 56 and cabinet back wall 57 may define together a cabinet space. It may also comprise plurality of castors 51. The movable projection device cabinet 100 may comprises a protecting cover arrangement 1 according to any one of the example embodiments described above in Figures 1 to 8 and arranged on an upper part of the cabinet 100.

According to an example embodiment, the protecting cover arrangement 1 or the projection device cabinet 100 may comprise one or more casters 51 and/or one or more furniture legs.

The projection device cabinet 100 may include a base 50. In an embodiment the base 50 may be a base board-like member. One or more casters 51 and/or one or more furniture legs may be arranged at the bottom surface of the base 50. In an embodiment the casters 51 may be provided at four corners on the bottom surface of the base 50. The casters 51 make it possible to move the cabinet 100 together with the projection device 200. A brake may be provided on the casters 50. Instead of using casters 51, the projection device cabinet may be arranged with furniture legs.

The movable projection device cabinet 100 may comprise the protecting cover arrangement 1 arranged on an upper part of the cabinet.

In an example embodiment the cabinet may comprise a top wall 3, 9 at a distance from the base 50 and substantially parallel with of the base 50. In an embodiment the top wall 3 and/or the lower top wall 9 may be a table board or other board-like member.

In an example embodiment of the projection device cabinet 100 a projection device space 8 may be arranged in a cabinet space between the base 50 and the top wall 3, 9 and between the first side wall 4, 54 and the second side wall 5, 55. A projection device support plate 60 or structure may be arranged between the first side wall 4, 54 and the second side wall 5, 55 and at a distance from the upper surface of the base 50. The projection device 200 may be arranged on the projection device support plate 60 or another support part.

In an example embodiment the projection device space 8 may be defined by an upper surface of the projection device support plate 60, a lower surface of the lower top wall 9, an inner surface of the first side wall 4, 54 and an inner surface of the second side wall 5, 55. On a front side of the projection device cabinet 200 may be arranged a front wall 56. The front wall 56 may be extending between a front edge of the base 50 and a front edge of the lower top wall 7. In an example embodiment the front wall 56 may be arranged to extend towards the lower top wall 9 in a perpendicular direction from the plane of the base 50. In a plane parallel of the base the front wall 56 may be extending from the first side wall 4, 54 to the second side wall 5, 55. In an example embodiment the front wall 56 may comprise a connecting panel 59. The front wall 56 may comprise a door. The connecting panel 59 may comprise connections for external systems or for example a mains connection.

The projection device support plate 60 may be arranged to extend from the front wall 56 towards a back wall 57 of the projection device cabinet 100. In an embodiment a height of the protection cover space may be arranged to increase at least on a portion of the distance of the projection device space extending from a front wall 56 towards the back wall 57. This means that there may be arranged more free space between the projection device and the upper wall (top wall) of the projection device space in the portion next to the back wall than in the portion of the projection device space next to the front wall.

The openings 44 may be arranged from outside of the cabin to the projection device space 8 of the cabinet. In an example embodiment the openings 44 may be arranged on the first side wall 54 and/or on the second side wall 5, 55. In an embodiment an air filter may be arranged in connection with the openings 44. In an embodiment a mesh may be arranged in connection with the openings 44.

A handle opening 58 may be arranged in each of the side walls 54, 55. The handle opening 58 may be arranged in a module with the openings 44. The module may also comprise the fan.

A connection panel 59 may be arranged in the projection device cabinet.

The arrangement 1 or projection device cabinet 100 may comprise a projection device 200 having a projecting structure 201, such as a lens and/or mirror system.

In an example embodiment at least one fan may be arranged to draw air from the projection device space and blow the air outside the cabinet. In an embodiment the at least one fan may be arranged to blow air to the projection device space from outside of the cabinet. In an example embodiment an opening 44 may be arranged to the first side wall at a point of the fan for conveying air from the projection device space outside the projection device space. In an example embodiment the at least one fan during its operation sucks air from the projection device space. In an example embodiment the at least one fan blows air from outside to the projection device space. In an example embodiment the fan may be configured to achieve an air flow through the at least one opening 44 to bring cooling air to the projection device. In an embodiment the air may be flow through a cooling system of the projection device and the air, which may be warming during a cooling phase of the projection device, may be discharged to the portion of projection device space next to other side wall. There the warm air flow coming from the projection device may be mixed with a flow of cool air coming from handle openings 58 of the first and second side walls 4, 5.

In an example embodiment the arrangement may comprise a plurality of fans. In an example embodiment of the Figure 9 two fans may be arranged on the side wall of the cabinet in connection with the cover space 8 i.e. projection device space. In an embodiment a cover panel, a lattice, a grill, or a mesh may be arranged to the back wall and/or front wall. In an example embodiment the cover, lattice, grill, or mesh may be arranged to the arrangement by a quick-release coupling. In an example embodiment the quick-release coupling of the cover panel may be arranged by magnets and their counter parts.

In an example embodiment an operation panel 41 may be arranged to the projection device cabinet 100. In an embodiment the operation panel 41 may be arranged on an upper part of the projection device cabinet. In an embodiment the upper part extends at a distance perpendicular from the plan of the lower top wall 9. The upper part has an upper part front wall 6 and the top wall 3. The first and second side wall may each have a top portion extending to the top wall 3 of the upper part. The back wall 57 of the projection device cabinet may extend to the top wall 3 of the upper part. The back wall 57 of the projection device cabinet may cover at least part of the back part of the cabinet.

In an example embodiment a loudspeaker system 70 may be arranged in the arrangement/ the projection device cabinet. In an example embodiment the loudspeaker system 70 may be arranged on the back wall 7 side of the projection device cabinet. In an example embodiment the speaker system 70 may be arranged on the upper part of the projection device cabinet.

In an example embodiment the operation panel 41 may be arranged on the upper part of the projection device cabinet. In an example embodiment the operation panel 41 may be arranged on the top wall 3 of the arrangement 1 and upper part of the projection device cabinet. In an embodiment the operation panel may be embedded to the top wall of the upper part of the arrangement and/or the projection device cabinet. In an embodiment a front surface of the operation panel 41 may be embedded at a distance inwards from a plane of the top wall 3 of the upper part of the projection device cabinet. The operation panel may comprise at least one or more of the following: on-off switch, volume up/down button(s), video signal in, HDMI, Mic/Line in, SPDIF in/out, several programmable user buttons, for example source, freeze, mute, pause. The operation panel may have power outlet. In an example embodiment the operation panel 41 may comprise a touch screen. In an embodiment the operation panel 41 may be a removable operation panel. In an embodiment the projection device cover arrangement or the movable projection device cabinet may comprise a computer. In an embodiment the computer may be arranged in the operation panel 41.

In an embodiment a second connecting panel 62 may be arranged in the projection device cabinet. In an embodiment the second connecting panel may comprise mains in connection. In an embodiment the connecting panel may further comprise other input/output connection points for power, sound, and data. In an example embodiment the second connecting panel 62 may be arranged in the projection device cabinet into a technical space 64. In an example embodiment the technical space 64 may be arranged between the base 2 and the projection device support plate or structure in the projection device cabinet 100. In an example embodiment the connecting panel may be arranged on connection rails arranged in the technical space. In an example embodiment, the back wall 57 or the front wall 56 may be arranged pivotable by hinges 61 to the first side wall 54 or to the second side wall 55. In an example embodiment the back or front wall 57, 56, is a door. In an example embodiment, at least one opening 19 may be arranged to the door or back wall 57 for the loudspeaker system 70. In an example embodiment, the door or back wall 57 do not cover the loudspeaker system 70. In an embodiment an opening may be arranged on the cabinet for a power cable. In an embodiment the opening may be arranged through a base 50.

In an example embodiment, a storage space 63 may be arranged in the projection device cabinet.

In an example embodiment, the projection device space of the projection device cabinet may be configured to receive a laser projector, preferable a laser projector with short throw or ultra-short throw lens. In an example embodiment, an image and sound may be optimized for different sized spaces. In an example embodiment, an AV technology of the movable projection device cabinet and the projection device optimized for the gym may be converted for conference use without the need for reprogramming or installation.

In an embodiment the movable projection device cabinet may transform a gymnasium for festive use and a lobby as an exhibition space. The movable projection device cabinet may be used for several different purposes, resulting in a high utilization rate of AV technology.

At the design phase, the light output of a projection device may be determined according to the requirements of room brightness and image size. In an example embodiment, the movable projection device cabinet and its sound system may be expanded to meet the needs of events by selecting appropriate connections and features for the solution.

According to an example embodiment, a protecting cover arrangement 1 or a movable projection device cabinet 100 comprises a loudspeaker system 70. The at least one loudspeaker system 70 may comprise at least one speaker module 71, which may comprise at least one waveguide module 72 and at least one transducer 73. The waveguide module 72 may comprise at least one waveguide 74 and a front part 75.

According to an example embodiment, the loudspeaker system 70 comprises at least one column, which comprises at least one speaker module 71. The at least two transducers 73 may be arranged in the at least one column using the at least one waveguide module 72. The column may be a vertical or horizontal column 12, 14.

According to an example embodiment, if the column is the vertical column 12, the at least two transducers 73 are arranged in at least one vertical installation angle a in relation to a horizontal plane 76 parallel to the top wall 3. The vertical column 12 may be parallel to the one of the first or second side wall 4, 5, 54, 55 of the protection cover 1 or the movable projection device cabinet 100.

According to an example embodiment, if the column is the horizontal column 14, the at least two transducers 73 are arranged in at least one horizontal installation angle d in relation to the vertical plane 77 parallel to the first or second side wall 4, 54, 5, 55. The horizontal column 12 may be parallel to the top wall 3 of the protection cover 1 or the movable projection device cabinet 100.

According to an example embodiment, the vertical installation angle a is, for example, from - 45° to 45°, from -15° to 15°, or from -7° to 7°. The vertical installation angle a may also be 0°, which means that the transducer 73 may not have been rotated in vertical direction and a vertical sound direction 79 may be straight ahead. Each of the at least two transducers 73 may have same or different vertical installation angles a. When the vertical installation angle a is above the horizontal plane 76, the vertical installation angle a is positive, for example 7°, and directed upwards. When the vertical installation angle a is below the horizontal plane 76, the vertical installation angle a is negative, for example 7°, and directed downwards. When the vertical installation angle a parallel to the horizontal plane 76, the vertical installation angle a is 0°, and directed to the direction of the horizontal plane 76.

According to an example embodiment, the horizontal installation angle d is from -120° to 120°. The horizontal installation angle may also be 0°, which means that the transducer 73 not been rotated in horizontal direction and horizontal sound direction 80 is straight ahead. Each of the at least two transducers 73 may have same or different horizontal installation angles d. When the horizontal installation angle d is opening towards the second partition wall 16 from the vertical plane 77, the horizontal installation angle d is positive, for example 120°. When the horizontal installation angle d is opening towards the first partition wall 15 from the vertical plane 77, the horizontal installation angle d is negative, for example -120°. When the horizontal installation angle d is parallel to the horizontal plane 76, the horizontal installation angle d is 0°, and directed to the direction of the vertical plane 77.

According to an example embodiment, the at least one waveguide module 72 comprises at least one attachment arrangement part 78 arranged in the at least one vertical installation angle a in relation to the horizontal plane 76 parallel to the top wall 3. According to an example embodiment, the at least one waveguide module 72 comprises at least one attachment arrangement part 78 arranged in the horizontal installation angle d in relation to the vertical plane 77 parallel to the first or second side wall 4, 5, 54, 55. Each of the at least two transducers 73 may be arranged to be attached to the corresponding attachment arrangement part 78.

The attachment arrangement part 78 of the at least one waveguide module 72 may form the vertical installation angle a, or horizontal installation angle d to attach the transducer 73 to it. This may allow the at least two transducers 73 to be installed at different installation angles a, d to direct the sound to the different parts of the space, like an auditorium, room, or sports hall, for example.

According to an example embodiment, the at least one waveguide 74 may be configured to direct the sound according to a vertical horizontal sound beam angle b and horizontal sound beam angle c. The waveguide module 72 may allow the at least two transducers 73 to be installed at different installation angles a, d, which directs the sound, improves the sound quality and speech clarity. In addition to that the vertical and horizontal sound beam angles b, c of the waveguide 74 may direct the sound even more accurately to the vertical and horizontal sound direction 79, 80.

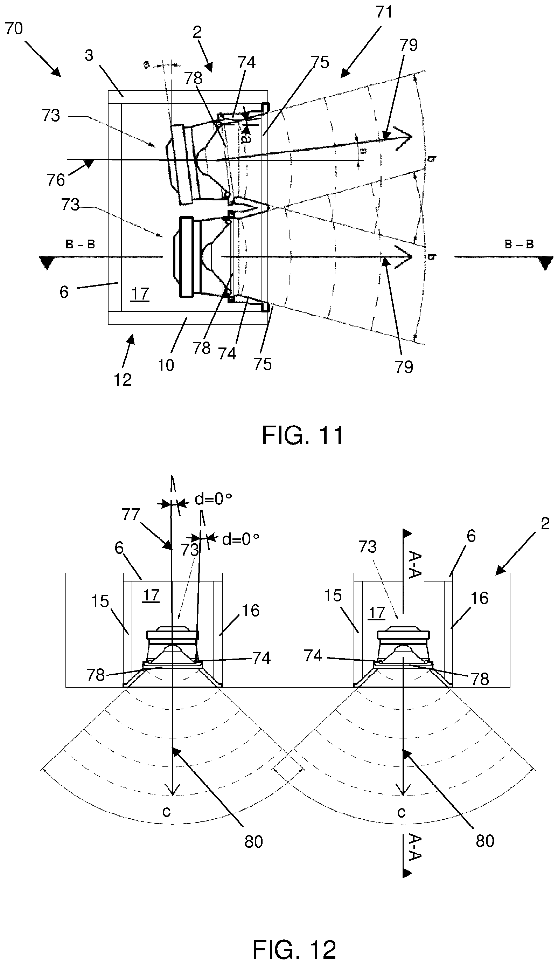

An example of Figure 11 shows schematically an example of a side view of a loudspeaker system 70. The loudspeaker system 70 may be similar to the loudspeaker system 70 of Figure 2 and may show cross-section B-B of it. The loudspeaker system 70 may be located in two enclosures 17. The enclosures may be formed by the top wall 3, front wall 6, support plate 10 and the first and second partition wall 15, 16. The loudspeaker system 70 may comprise two speaker modules 71. The speaker modules 71 may comprise one vertical column 12. Each of the modules 71 may be located in the own enclosure 17. The speaker modules 71 may comprise two transducers 73 and one waveguide module 72. Two transducers 73 of the one speaker module 71 may be attached to one waveguide module 72. The two transducers 73 may be located on top of each other. The waveguide module 72 may comprise two waveguides 74 and a front part 75. The two transducers 73 may be configured to be attached to the waveguide module 72 with the help of an attachment arrangement part 78 arranged in the at least one vertical installation angle a in relation to the horizontal plane 76 parallel to the top wall 3. An example of Figure 11 shows that the vertical installation angle a, for example 7°, of the upper transducer 73 is bigger, than the vertical installation angle a, for example 0°, of the lower transducer 73. The waveguide module 72 may allow the at least two transducers 73 to be installed at the same or different vertical installation angles a. As seen from the example of Figure 11, the upper transducer 73 may direct the sound upwards to the first vertical sound direction 79 and the lower transducer 73 directs the sound straight ahead to the second vertical sound direction 79. The vertical installation angle a may direct the sound, improve the sound quality, and speech clarity.

The attachment arrangement part 78 of the waveguide modules 71 may form the vertical installation angle a, of the transducer 73 attached to it. This may allow the at least two transducers 73 to be installed at same or different installation angles a. The upper transducer 73 has the vertical installation angle a, for example 7° and the lower transducer 73 has the vertical installation angle a, for example 0°.

In addition to that, the vertical sound beam angles b of the waveguides 74 may direct the sound even more accurately to the vertical sound direction 79. The sound beam angle b, c may measure the spread of sound i.e., in which angle the sound beam leaves from the transducer 73. In the example of Figure 11 the vertical sound beam angles b are 30° for both of the transducers 73, for example. The vertical sound beam angles b may be same or different for each of the waveguides 74.

An example of Figure 12 shows schematically an example of a top view of a loudspeaker system 70 showed in Figure 11. The loudspeaker system 70 may be similar to the loudspeaker system 70 of Figure 2 and may show cross-section A-A of it. The loudspeaker system 70 may be located in two enclosures 17. The enclosures may be formed by the top wall 3, front wall 6, support plate 10 and the first and second partition wall 15, 16. The loudspeaker system 70 may comprise two speaker modules 71. The speaker modules 71 may comprise one vertical column 12. Each of the modules 71 may be located in the own enclosure 17. The speaker modules 71 may comprise two transducers 73 and one waveguide module 72. Two transducers 73 of the one speaker module 71 may be attached to one waveguide module 72. The waveguide module 72 may comprise two waveguides 74 and a front part 75. The two transducers 73 may be configured to be attached to the waveguide module 72 with the help of an attachment arrangement part 78 arranged in the at least one horizontal installation angle d in relation to the vertical plane 77 parallel to the first or second side wall 4, 5, 54, 55. An example of Figure 12 shows that the horizontal installation angle d, for example 0°, is the same for both of the transducers 73. The waveguide module 72 may allow the at least two transducers 73 to be installed at the same or different horizontal installation angles d. As seen from the example of Figure 12, both of the transducers 73 may direct the sound to the same horizontal sound direction 80.

The attachment arrangement part 78 of the waveguide modules 71 may form the horizontal installation angle d, of the transducer 73 attached to it. This may allow the at least two transducers 73 to be installed at same or different installation angles d. Both of the transducer 73 have the same horizontal installation angle d, for example 0°. Even though the horizontal installation angles d are 0° their location is shown in Figure 12.

In addition to that, the horizontal sound beam angles c of the waveguides 74 may direct the sound even more accurately to the horizontal sound direction 80. In the example of Figure 12 the horizontal sound beam angles c are 90° for both of the transducers 73, for example. The horizontal sound beam angles c may be same or different for each of the waveguides 74.

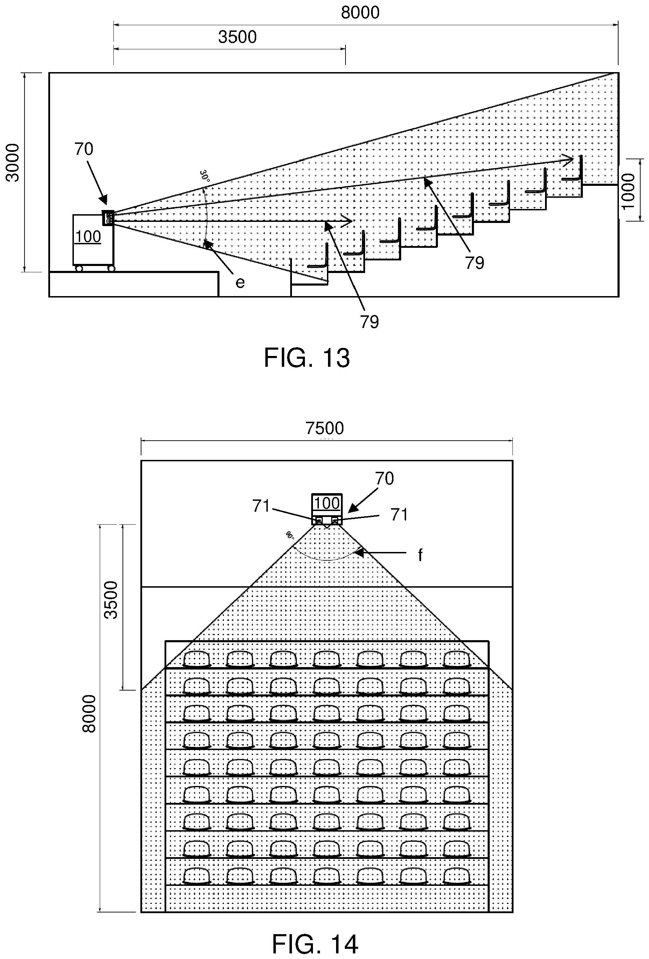

An example of Figure 13 shows schematically a side view of directing sound in an auditorium comprising a loudspeaker system 70. An example of Figure 14 shows schematically a top view of directing sound in the auditorium of Figure 13. The loudspeaker system 70 may be located into the movable projection device cabinet 100. The loudspeaker system may comprise the loudspeaker system 70 of the Figures 2, 11 and 12. According to the example of Figure 13, the direction of the sound is optimized for a small auditorium. The sound may be directed upwards and at the same time minimize the amount of sound reflected from the ceiling and walls. The reflections may be controlled by the vertical and horizontal sound coverage angles e, f of the waveguides 74. This may limit the vertical and horizontal sound directions 79, 80 to the desired area. The upward directed sound may be implemented by tilting the upper transducer 73 speaker seven degrees to the back according to the vertical installation angle a, as shown in Figure 11. The vertical sound coverage angle e may be 30° for both of the transducers 73. The horizontal sound coverage angle f may be 90° for both of the transducers 73. The direction of the sound may be optimized according to the area between the first and last rows of seats taking into account the step-by-step rise of seat rows. The optimal sound range may start at a distance of 3,5 m in front of the loudspeaker system, wherein width of the sound range may be 7,5 m. The optimal sound range may continue to a distance of 8 m from the loudspeaker system 70 and may rise upwards 1 m in this distance.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

Although subjects may be referred to as 'first, 'second', or 'third' subjects, this does not necessarily indicate any order or importance of the subjects. Instead, such attributes may be used solely for the purpose of making a difference between subjects.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. A protecting cover arrangement for a projection device, wherein the protecting cover arrangement comprises
a first portion, having a top wall, a first side wall extending from the top wall, a second side wall extending from the top wall and at a distance from the first side wall, and a front wall defining together a first cover space for receiving the projection device;
at least one enclosure; and
at least one loudspeaker system, wherein
the at least one loudspeaker system comprises at least one speaker module comprising at least one waveguide module and at least one transducer; and
the at least one loudspeaker system comprises at least two transducers arranged to the at least one enclosure using the at least one waveguide module.

2. The protecting cover arrangement according to claim 1, wherein the waveguide module comprises at least one waveguide and a front part.

3. The protecting cover arrangement according to claim 2, wherein the at least one waveguide and the front part are made of one piece.

4. The protecting cover arrangement according to any one of the preceding claims, wherein the at least one transducer is arranged removably to the waveguide module.

5. The protecting cover arrangement according to any one of the preceding claims, wherein the at least one speaker module is arranged removably to the at least one enclosure.

6. The protecting cover arrangement according to any one of the preceding claims, wherein the loudspeaker system comprises at least one column comprising the at least two transducers.

7. The protecting cover arrangement according to claim 6, wherein the at least two transducers are arranged in the at least one column using the at least one waveguide module.

8. The protecting cover arrangement according to claim 6 or 7, wherein each column of the at least one column is arranged to its own enclosure.

9. The protecting cover arrangement according to any one of the claims 6 to 8, wherein the column is a vertical or horizontal column.

10. The protecting cover arrangement according claim 9, wherein
if the column is the vertical column, the at least two transducers are arranged in at least one vertical installation angle (a) in relation to a horizontal plane parallel to the top wall; or
if the column is the horizontal column, the at least two transducers are arranged in at least one horizontal installation angle in relation to the vertical plane parallel to the first or second side wall.

11. The protecting cover arrangement according to claim 10, wherein
the at least one waveguide module comprises at least one attachment arrangement part arranged in the at least one vertical installation angle in relation to the horizontal plane parallel to the top wall; or
the at least one waveguide module comprises at least one attachment arrangement part arranged in the horizontal installation angle in relation to the vertical plane parallel to the first or second side wall, wherein
each of the at least two transducers are arranged to be attached to the corresponding attachment arrangement part.

12. The protecting cover arrangement according to any one of the claims 2 to 11, wherein the at least one waveguide is configured to direct the sound according to a vertical and horizontal sound beam angle.

13. The protecting cover arrangement according to any one of the preceding claims, wherein the waveguide module comprises at least one of the following: a camera, microphone, operation panel, and/or sensor.

14. The protecting cover arrangement according to any one of the preceding claims, wherein the protecting cover arrangement further comprises at least one subwoofer.

15. A movable projection device cabinet comprises a base, a first cabinet side wall extending from the base, a second cabinet sidewall extending from the base and at a distance from the first cabinet side wall, a cabinet front wall and cabinet back wall defining together a cabinet space, wherein the movable projection device cabinet comprises a protecting cover arrangement according to any one of the claims 1 to 14 arranged on an upper part of the movable projection device cabinet.
